# EUROPEAN PATENT APPLICATION

(11) **EP 2 486 967 A2**
(43) Date of publication of application: **15.08.2012**
(21) Application number: 10821969.2
(22) Date of filing: 04.10.2010
(51) Int. Cl.: B01D 19/04, C02F 1/00, C09D 7/12, C09D 201/00

(54) **DEFOAMING AGENT**

(30) Priority: 09.10.2009 JP 2009235098
(71) Applicant: San Nopco Limited, Kyoto-city, Kyoto 605-0995 (JP)
(72) Inventor: MATSUMURA, Yohei, Kyoto-shi Kyoto 605-0995 (JP); IZUMI, Yoshihide, Kyoto-shi Kyoto 605-0995 (JP); HISADA, Nobuo, Kyoto-shi Kyoto 605-0995 (JP)
(74) Representative: Vossius & Partner
(86) International application number: PCT/JP2010/067374
(87) International publication number: WO 2011/043299

(57) **Abstract**

The object of the present invention is to provide a defoaming agent that is superior in defoamabilities (initial defoamability and defoaming durability).

The present invention is a defoaming agent comprising a bisamide (A) in dispersion in a polyether compound (B), wherein the content of the bisamide (A) is 0.01 to 10% by weight and the content of the polyether compound (B) is 90 to 99.99% by weight based the weight of the bisamide (A) and the polyether compound (B), and the mode (µm) in the particle diameter distribution on a volume basis of the bisamide (A) is 0.1 to 5 µm.

The bisamide (A) is preferably a bisamide represented by formula (1),

R¹-CONH(CH₂)ₜ-NHCOR¹ (1)

wherein R¹ is an alkyl group, an alkenyl group, a hydroxyalkyl group or a hydroxyalkenyl group having 10 to 22 carbon atoms, and t is an integer of 1. to 6.

## Description

### TECHNICAL FIELD

The present invention relates to defoaming agents.

### BACKGROUND ART

Defoaming agents in which a bisamide is dispersed in an alkylene oxide adduct of alcohol are known (Patent Document 1) as defoaming agents for paint (water-based paint, etc.) and defoaming agents for various production processes (a paper-making process, a fermentation process, a waste water treatment process, a monomer stripping process, a polymer polymerization process, etc.).

### PRIOR ART DOCUMENTS

### PATENT DOCUMENTS

Patent Document 1: JP 1-99619 A

### DISCLOSURE OF THE INVENTION

### PROBLEMS TO BE SOLVED BY THE INVENTION

Conventional defoaming agent compositions have a problem that sufficient defoamabilities (initial defoamability, durable defoamability) is not obtained.
The object of the present invention is to solve this problem and provide a defoaming agent superior in defoamabilities (initial defoamability and defoaming durability).

### SOLUTIONS TO THE PROBLEMS

After earnest study for attaining the above object, the present inventor found that superior defoamability is exerted by controlling the particle diameter of a dispersoid to within an appropriate range in a defoaming agent in which a bisamide is dispersed in a polyether, thereby accomplishing the present invention.
In contrast, in conventional defoaming agent compositions (e.g., one disclosed in Patent Document 1), particles of a bisamide are so coarse that they are low in defoamability (their defoamability is quite insufficient).
That is, the gist of the feature of the defoaming agent of the present invention is that the agent contains a bisamide (A) in dispersion in a polyether compound (B), wherein
the content of the bisamide (A) is 0.01 to 10% by weight and the content of the polyether compound (B) is 90 to 99.99% by weight based on the weight of the bisamide (A) and the polyether compound (B), and
the mode in the particle diameter distribution on a volume basis of the bisamide (A) is 0.1 to 5 µm.

The defoaming agent of the present invention can be produced by the following production methods (1), (2) or (3).

Production method (1) is a method for producing the above-described defoaming agent, the gist of which is that the method comprises:
step (1) of dissolving a bisamide (A) while heating and stirring the bisamide (A) and part of a polyether compound (B), thereby obtaining a solution,
step (2) of feeding the resulting solution into the remainder of the polyether compound (B) while cooling and stirring the remainder, thereby obtaining a fine dispersion of the bisamide (A), and
step (3) of subjecting the resulting fine dispersion to homogenization, thereby obtaining a defoaming agent.

Production method (2) is a method for producing the above-described defoaming agent, the gist of which is that the method comprises:
step (4) of dissolving a bisamide (A) while heating and stirring the bisamide (A), part of a polyether compound (B), and a crystal form controlling agent (G), thereby obtaining a solution,
step (5) of feeding the resulting solution into the remainder of the polyether compound (B) while cooling and stirring the remainder, thereby obtaining a fine dispersion of the bisamide (A), and
step (6) of subjecting the resulting fine dispersion to homogenization, thereby obtaining a defoaming agent.

Production method (3) is a method for producing the above-described defoaming agent, the gist of which is that the method comprises:
step (7) of dissolving a bisamide (A) while heating and stirring the bisamide (A), a polyether compound (B), and a crystal form controlling agent (G), thereby obtaining a solution,
step (8) of cooling and stirring the solution to make the bisamide (A) deposit, thereby obtaining a fine dispersion, and
step (9) of subjecting the resulting fine dispersion to homogenization, thereby obtaining a defoaming agent.

The gist of the feature of the emulsion paint of the present invention lies in that the paint comprises a resin emulsion, a pigment, an aqueous medium, and the aforementioned defoaming agent.

The gist of the feature of the waste water treatment method of the present invention lies in that the method comprises a step of adding the above-described defoaming agent to waste water to treat the waste water.

### EFFECTS OF THE INVENTION

The defoaming agent of the present invention demonstrates excellent defoamabilities (initial defoamability and defoaming durability). In addition, by the use of the production method of the present invention, it is possible to obtain a defoaming agent superior in defoamabilities (initial defoamability and defoaming durability) easily. Moreover, since the emulsion paint of the present invention contains the above-described defoaming agent, it demonstrates superior defoamabilities (initial defoamability and defoaming durability). Furthermore, the waste water treatment method of the present invention is superior in treatment efficiency and can treat waste water efficiently because of the addition of the above-described defoaming agent.

### EMBODIMENTS OF THE INVENTION

As the bisamide (A), conventionally known bisamides having two amide bonds can be used, and a bisamide represented by formula (1) is preferred from the viewpoint of defoamabilities.
The bisamide (A) does not include any alkylene oxide adducts of bisamides (such adducts correspond to the polyether compound (B)).

R¹-CONH(CH₂)ₜ-NHCOR¹ (1)

R¹ is an alkyl group, an alkenyl group, a hydroxyalkyl group or a hydroxyalkenyl group having 10 to 22 carbon atoms, and t is an integer of 1 to 6.

Among the options of R¹, examples of the alkyl group include decyl, dodecyl, tetradecyl, hexadecyl, octadecyl, and docosyl. Examples of the alkenyl group include decenyl, dodecenyl, tetradecenyl, hexadecenyl, octadecenyl, and docosenyl. Examples of the hydroxyalkenyl group include hydroxydecyl, hydroxydodecyl, hydroxytetradecyl, hydroxyhexadecyl, hydroxyoctadecyl, and hydroxydocosyl. Examples of the hydroxyalkenyl group include hydroxydecenyl, hydroxydodecenyl, hydroxytetradecenyl, hydroxyhexadecenyl, hydroxyoctadecenyl, and hydroxydocosenyl.

The bisamide represented by formula (1) includes reaction products of alkylenediamines having 1 to 6 carbon atoms with fatty acids having 10 to 22 carbon atoms, examples of which include ethylene bisstearylamide, ethylene bispalmitylamide, ethylene bismyristylamide, ethylene bislaurylamide, ethylene bisoleylamide, methylene bisstearylamide, hexamethylene bisstearylamide, ethylene bis-12-hydroxystearylamide, hexamethylene bis(12-hydroxystearyl)amide, ethylene bisbehenylamide, and ethylene biserucylamide.

Among these, ethylene bisstearylamide, methylene bisstearylamide, ethylene bispalmitylamide, ethylene bismyristylamide, hexamethylene bisstearylamide, ethylene bisoleylamide, and ethylene bis-12-hydroxystearylamide are preferred from viewpoints of defoamabilities and so on, and particularly preferred is ethylene bisstearylamide.

The content (% by weight) of the bisamide (A) is preferably 0.01 to 10, more preferably 0.1 to 9, particularly preferably 0.5 to 8, and most preferably 1 to 7.5 based on the weight of the bisamide (A) and the polyether compound (B).

It is noted that the bisamide (A) may contain auxiliary components. Such auxiliary components are components other than bisamides and include unreacted diamine, monoamide, and unreacted carboxylic acid. The content (% by weight) of the auxiliary components is preferably less than 60, more preferably less than 50, and particularly preferably less than 40 based on the weight of the bisamide (A).

The polyether compound (B) includes polymers units of which are oxyalkylene groups having 2 to 18 carbon atoms, and at least one member selected from the group consisting of a polyether compound (B1) represented by formula (2), a polyether compound (B2) represented by formula (3), a polyether compound (B3) represented by formula (4), a polyether compound (B4) represented by formula (5), and a polyether compound (B5) represented by formula (6) can be mentioned preferably as an example.

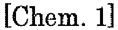

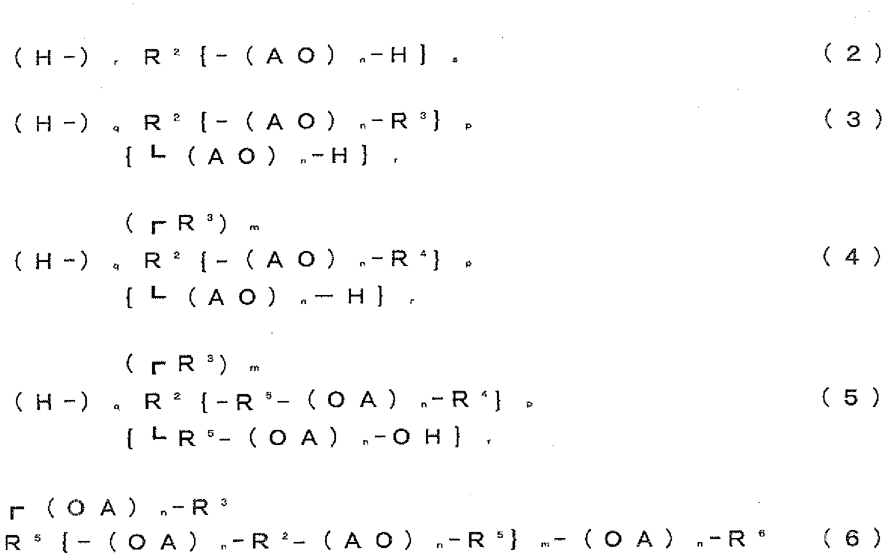

R² represents a reaction residue of an active hydrogen compound having 1 to 25 carbon atoms, R³ and R⁴ each represent a monovalent organic group having 1 to 24 carbon atoms, R⁵ represents a divalent organic group having 1 to 24 carbon atoms, R⁶ represents a hydroxyl group or a monovalent organic group having 1 to 24 carbon atoms, AO and OA each represent an oxyalkylene group having 2 to 18 carbon atoms, glycidol, a reaction residue of an alkyl glycidyl ether having 4 to 18 carbon atoms, or a reaction residue of an alkenyl glycidyl ether having 4 to 18 carbon atoms; the proportion accounted for by oxyethylene groups in (AO)n is 0 to 30% by weight; n is an integer of 1 to 100, wherein when there are two or more n in one molecule, they may be either identical or different; s is an integer of 1 to 10, p is an integer of 0 to 10, q is an integer of 0 to 9, r is an integer of 0 to 9, m is an integer of 0 to 9, p+r is an integer of 1 to 10, p+q+r is an integer of 1 to 10, and p+q+r+m is 2 to 10.

The active hydrogen-containing compound that constitutes the reaction residue (R²) of an active hydrogen compound having 1 to 25 carbon atoms includes compounds containing at least one hydroxyl group (-OH), imino group (-NH-) and/or amino group (-NH₂), and specifically includes alcohols, amides, and amines.

Examples of the alcohols include monools (methanol, butanol, stearyl alcohol, oleyl alcohol, isostearyl alcohol, etc.) and polyols (ethylene glycol, propylene glycol, glycerol, diglycerol, tetraglycerol, trimethylolpropane, pentaerythritol, dipentaerythritol, dihydroxyacetone, fructose, glucose, mannose, galactose, sucrose, lactose, trehalose, etc.).

Examples of the amides include monoamides (formic acid amide, propionic acid amide, stearylamide, etc.) and polyamides (malonic acid diamide, ethylenebisoctylamide, etc.).

Examples of the amines include monoamines (dimethylamine, ethylamine, aniline, stearylamine, etc.) and polyamines (ethylenediamine, diethylenetriamine, triethylenetetramine, etc.).

The monovalent organic group having 1 to 24 carbon atoms (R³, R⁴) include alkyl groups (R), alkenyl groups (R'), acyl groups having 8 to 24 carbon atoms (-COR), aroyl groups having 8 to 24 carbon atoms (-COR'), N-alkylcarbamoyl groups (-CONHR), N-alkenylcarbamoyl groups (-CONHR'), alkylcarbonylamino groups (-NHCOR), alkenylcarbonylamino groups (-NHCOR'), alkylcarboxyamino groups (alkyl carbamate groups, -NHCOOR), and alkenylcarboxyamino groups (alkenyl carbamate groups, -NHCOOR').

Examples of the alkyl groups (R) include methyl, ethyl, isopropyl, tert-butyl, octyl, 2-ethylhexyl, dodecyl, and octadecyl.

Examples of the alkenyl groups (R') include vinyl, propenyl, hexenyl, isooctenyl, dodecenyl, and octadecenyl.

Of the hydroxyl group or the monovalent organic group having 1 to 24 carbon atoms (R⁶), the monovalent organic group having 1 to 24 carbon atoms include organic groups the same as those provided above.

The divalent organic group having 1 to 24 carbon atoms (R⁵) includes alkylene groups (T), alkenylene groups (T'), 1-oxaalkylene groups (-OT-), 1-oxaalkenylene groups (-OT'-), 1-oxoalkylene groups (-COT-), 1-oxoalkenylene groups (-COT'-), 1-aza-2-oxoalkylene groups (-NHCOT-), 1-aza-2-oxoalkenylene groups (-NHCOT'-), 1-oxo-2-azaalkylene groups (-CONHT-), 1-oxo-2-azaalkenylene groups (-CONHT'-), 1-aza-2-oxo-3-oxaalkylene groups (-NHCOOT-), and 1-aza-2-oxo-3-oxaalkenylene groups (-NHCOOT'-).

The alkylene group (T) includes methylene, ethylene, isobutylene, 1,10-decylene, 1,2-decylene, 1,12-dodecylene, 1,2-dodecylene, and 1,2-actadecylene.

The alkenylene group (T') includes ethynylene, isobutynylene, 1,10-decynylene, 1-octylethyriylene, 1-octenylethylene, 1,12-dodecynylene, and 1-vctadecenylethylene.

Of the oxyalkylene group having 2 to 18 carbon atoms, glycidol, the reaction residue of an alkyl glycidyl ether having 4 to 18 carbon atoms, or the reaction residue of an alkenyl glycidyl ether having 5 to 18 carbon atoms (AO, OA), examples of the oxyalkylene group having 2 to 18 carbon atoms include oxyethylene, oxypropylene, oxybutylene, oxyisobutylene, oxy-1,2-decylene, oxy-1,12-dodecylene, oxy-1,2-dadecylene, and oxy-1,2-actadecylene.

Among (AO, OA), examples of the alkyl glycidyl ether having 4 to 18 carbon atoms include methyl glycidyl ether, ethyl glycidyl ether, butyl glycidyl ether, 2-ethylhexyl glycidyl ether, dodecyl glycidyl ether, and octadecyl glycidyl ether.

Among (AO, OA), examples of the alkenyl glycidyl ether having 5 to 18 carbon atoms include vinyl glycidyl ether, butenyl glycidyl ether, 2-ethylhexenyl glycidyl ether, dodecenyl glycidyl ether, and octadecenyl glycidyl ether.

The proportion accounted for by oxyethylene groups in (AO)n is 0 to 30% by weight, preferably 0 to 25% by weight, and more preferably 0 to 20% by weight based on the overall weight of the (AO)n. When containing oxyethylene groups, the lower limit of the proportion accounted for by the oxyethylene groups is preferably 3% by weight, more preferably 5% by weight, and particularly preferably 8% by weight based on the weight of the (AO)n.

n is an integer of 1 to 100, preferably an integer of 2 to 75, and more preferably an integer of 3 to 50.

Examples of the polyether compound (B1) represented by formula (2) include polyoxypropylene monobutyl ether, propylene oxide ethylene oxide block adducts of tetradecyl alcohol, propylene oxide ethylene oxide block adducts of trimethylolpropane, polyoxypropylene glycol, polyoxyethylene polyoxypropylene glycol (block addition), propylene oxide adducts of glycerol, ethylene oxide propylene oxide block adducts of glycerol, propylene oxide adducts of monododecylamine, polyoxypropylene monooleate, propylene oxide 2-ethylhexyl glycidyl block adducts of glycerol, propylene oxide butylene oxide block adducts of sucrose, and ethylene oxide propylene oxide block adducts of pentaerythritol.

Examples of the polyether compound (B2) represented by formula (3) include polyoxypropylene monobutyl ether monooleate, distearate of polyoxyethylene polyoxypropylene glycol (block addition), monostearates of propylene oxide adducts of glycerol, and mono-N-hexylcarbamates of propylene oxide adducts of sucrose.

Examples of the polyether compound (B3) represented by formula (4) include propylene oxide adducts of ethylene bisstearylamide, propylene oxide adducts of glycerol monostearate, and mono-N-decylcarbamates of propylene oxide adducts of sucrose mono(2-ethylhexylglycidyl) ether.

Examples of the polyether compound (B4) represented by formula (5) include monooleates of propylene oxide adducts of castor oil and propylene oxide adducts of glycerol bis(12-hydroxystearate).

Examples of the polyether compound (B5) represented by formula (6) include reaction products of polyoxypropylene monolauryl ether and polyoxypropylene glycol with hexamethylene diisocyanate, and reaction products of polyoxypropylene monostearyl ether and polyoxyethylene polyoxypropylene glycol (block addition) with xylene diisocyanate.

Among these, the polyether compound (B1) represented by formula (2) and the polyether compound (B2) represented by formula (3) are preferred from the viewpoints of defoamability and so on. That is, preferred are one in which the polyether compound (B) contains the polyether compound (B1) represented by formula (2), one in which the polyether compound (B) contains the polyether compound (B2) represented by formula (3), and one in which the polyether compound (B) contains the polyether compound (B1) represented by formula (2) and the polyether compound (B2) represented by formula (3).

The content (% by weight) of the polyether compound (B) is preferably 90 to 99.99, more preferably 91 to 99.9, particularly preferably 92 to 99.5, and most preferably 92.5 to 99, based on the weight of the bisamide (A) and the polyether compound (B).

The mode (µm) in the particle diameter distribution on a volume basis of the bisamide (A) is preferably 0.1 to 5, more preferably 0.1 to 3, and particularly preferably 0.2 to 1. When the mode is within such ranges, defoamability is further improved.

The particle diameter distribution is measured by dispersing a sample to be measured in a suitable dispersing medium (a substance that dissolves a polyether (B) homogeneously without allowing a dispersoid to dissolve and/or agglomerate; examples thereof include methanol, polyoxypropylene glycol, acetone, a propylene oxide adduct of glycerol, or hexane; appropriate one is selected according to the dispersoid and the polyether (B)) by using a laser diffraction type particle size distribution analyzer having the measurement principle disclosed in JIS Z8825-1-2001 "Particle size analysis -- Laser diffraction methods -- Part 1: General principles" (for example, SALD-1100 manufactured by Shimadzu Corporation, LA-950 manufactured by HORIBA, Ltd., LA-950V2 manufactured by HORIBA, Ltd., Microtrac particle size analyzer UPA-ST150 manufactured by Nikkiso Co., Ltd.; "Microtrac" is a registered trademark of Leeds And Northrup Company). The particle diameter which affords a maximum frequency in this particle diameter distribution is defined as a mode particle diameter.

The mode (µm) can be controlled by a method that involves dissolving a bisamide (A) and a polyether compound (B) uniformly by heating to afford a solution and cooling the solution to precipitate the bisamide (A) (control method 10) and a method that involves performing heat treatment after the precipitation (control method 20).

(Control method 10) includes control technique (11) in which the mode is controlled by the cooling rate at the time of precipitating the bisamide (A) and control technique (12) in which a crystal form controlling agent (G) is allowed to co-exist at the time of precipitating the bisamide (A).

### <Control technique (11)>

In cooling a solution to precipitate a bisamide (A), the mode (µm) of dispersed particles of the bisamide (A) to be obtained tends to become smaller as the rate of cooling the solution becomes higher and, conversely, the mode (µm) of the bisamide (A) tends to become larger as the rate of cooling becomes lower.

### <Control technique (12)>

In cooling a solution to precipitate a bisamide (A), it is possible to change the crystal form of the bisamide (A) to be obtained and reduce the mode of dispersed particles by adding a crystal form controlling agent (G) to the solution beforehand and cooling it in the presence of the crystal form controlling agent (G) to perform the precipitation. Conversely, if precipitation is carried out by cooling without using a crystal form controlling agent (G), it is impossible to reduce the mode of the dispersed particle of the bisamide (A) to be obtained unless control technique (11) is applied.

The crystal form controlling agent (G) includes sulfonate (-SO₃M, M is a metal atom) group-containing organic compounds and amino group- or ammonio group-containing organic compounds.

Sulfonate group-containing organic compounds include metal salts of organosulfonic acids and metal salts of organosulfates.
Examples of the organosulfonic acid include alkylarylsulfonic acids having 12 to 24 carbon atoms, alkyl diphenyl ether disulfonic acids having 18 to 30 carbon atoms, alkylsulfonic acids having 6 to 18 carbon atoms, and petroleum sulfonic acids.

Examples of the alkylarylsulfonic acids having 12 to 24 carbon atoms include hexylbenzenesulfonic acid, dodecylbenzenesulfonic acid, octadecylbenzenesulfonic acid, dodecylnaphthalenesulfonic acid, and dodecylbiphenylsulfonic acid.

Examples of the alkyl diphenyl ether disulfonic acids having 18 to 30 carbon atoms include dodecyl diphenyl ether disulfonic acid {C₁₂H₂₃-C₆H₄(SO₃H)-O-C₆H₄-SO₃H}.

Examples of the alkylsulfonic acids having 6 to 18 carbon atoms include hexanesulfonic acid, dodecyldecanesulfonic acid, and octadecanesulfonic acid.

Examples of the organosulfates include organosulfates having 6 to 18 carbon atoms, and specifically hexylsulfates, laurylsulfates, and octadecylsulfates.

Metal salts include alkali metal salts and alkaline earth metal salts.

Metal salts of organosulfonic acids and metal salts of organosulfates can be obtained easily from the market, and examples thereof include calcium dodecylbenzenesulfonate (an exemplary commercial name is TAYCAPOWER BC2070M; Tayca Corporation), sodium alkylbenzenesulfonate (an exemplary commercial name is NEWREX R; NOF Corporation), sodium dodecyl diphenyl ether disulfonate, sodium laurylsulfate, barium petroleum sulfonate (an exemplary commercial name is BA-30N; MORESCO Corporation), and calcium petroleum sulfonate (an exemplary commercial name is CA-45N; MORESCO Corporation).

Examples of the amino group- or ammonio group-containing organic compounds include organic quaternary ammonium salts and alkylamines having 12 to 24 carbon atoms.
Examples of the organic quaternary ammonium salts include salts of organic quaternary ammonium having 12 to 32 carbon atoms with halogen ions or organic acid ions having 1 to 3 carbon atoms, specifically ethyloctyldimethylammonium bromide, octadecyltrimethylammonium acetate, octadecyldimethylbenzylammonium formate, stearyldimethylbenzylammonium chloride, and benzalkonium chloride.

Examples of the alkylamines having 12 to 24 carbon atoms include stearylamine, and N,N-dimethylbehenylamine.

The organic quaternary ammonium salts can be obtained easily from the market, and examples thereof include stearyldimethylbenzylammonium chloride (Cation S as a commercial name, Sanyo Chemical Industries, Ltd.).

Among these, the sulfonate group-containing organic compounds are preferred, metal salts of organosulfonic acids and metal salts of organosulfates are particularly preferred, and metal salts of organosulfonates are most preferred.

When containing a crystal form controlling agent (G), the content (% by weight) thereof is preferably 0.01 to 10, more preferably 0.1 to 5, particularly preferably 0.2 to 4, and most preferably 0.3 to 3 based on the weight of the bisamide (A) and the polyether compound (B).

If a crystal form controlling agent (G) is used, it is possible to inhibit precipitated particles of the bisamide from growing in a specific direction and thereby produce a nearly isotropical form (a granular form). On the other hand, if a crystal form controlling agent (G) is not used, precipitated particles of the bisamide grow into a thin string-like form and, as a result, a resulting defoaming agent may become so high in viscosity that it may not be suitable for handling. If the bisamide (A) is precipitated in the presence of a crystal form controlling agent (G), a defoaming agent that is low in viscosity and superior in handleability can be obtained.

As to the method that involves performing heat treatment after the precipitation (control method 20), it is possible to make large the mode (µm) by heat-treating at 50 to 100°C the fine dispersion in which the bisamide (A) has precipitated. The mode tends to become larger as the temperature becomes higher and the mode (µm) tends to become larger as the time of heat treatment becomes longer.
On the other hand, it is possible to prevent the mode (µm) from becoming large by keeping the fine dispersion in which the bisamide (A) has precipitated at lower than 50°C (preferably 0 to 40°C, more preferably 0 to 35°C, particularly preferably 0 to 30°C, and most preferably 0 to 25°C).

The defoaming agent of the present invention may further contain at least one dispersoid selected from the group consisting of a metallic soap (C), a synthetic resin (D), hydrophobic silica (E), and a wax (F).
When a metallic soap (C), a synthetic resin (D), hydrophobic silica (E), and/or a wax (F) is contained, these may be dispersed in the polyether compound (B). Particularly, a metallic soap (C) may be dissolved partially or wholly in the polyether compound (B).

When a metallic soap (C), a synthetic resin (D) and hydrophobic silica (E) are contained, their contents (% by weight) are preferably 0.01 to 10, more preferably 0.1 to 9, particularly preferably 0.2 to 8, and most preferably 0.3 to 7.5 based on the weight of the bisamide (A) and the polyether compound (B).

When a wax (F) is contained, its content (% by weight) is preferably 0.01 to 10, more preferably 0.05 to 10, even more preferably 0.1 to 9, particularly preferably 0.2 to 8, and most preferably 0.3 to 7.5 based on the weight of the bisamide (A) and the polyether compound (B).

Examples of the metallic soap (C) include salts of fatty acids having 12 to 22 carbon atoms with metals (alkaline earth metals, aluminum, manganese, cobalt, lead, chromium, copper, iron, nickel, etc.), specifically aluminum stearate, calcium stearate, zinc laurate, magnesium behenate, magnesium laurylsulfate, and calcium dodecylbenzenesulfonate. Among these, aluminum stearate and zinc laurate are preferred.

Examples of the synthetic resin (D) include (co)polymers of ethylenic unsaturated monomers (polystyrene, polyacrylonitrile, polymethyl methacrylate, styrene/acrylonitrile copolymers, etc.) and polymers of polycondensation monomers (polyurethane, polyester, polyamide, etc.).

The particle diameter (µm) of the synthetic resin (D) is preferably 0.1 to 10, more preferably 0.12 to 9, and particularly preferably 0.15 to 8.

As to the synthetic resin (D), particles prepared by using a technique such as emulsion polymerization may be used, or it is also permitted to pulverize particles having a large particle diameter to have a proper particle diameter. It is also permitted to prepare the synthetic resin (D) by polymerizing monomers in the polyether (B).

Such synthetic resin can be produced by known methods (for example, JP 4-132705 A, JP 2009-7506 A, JP 7-62212 A, JP 63-58610 B, and JP 08-59770 A), and so on.

The hydrophobic silica (E) includes hydrophobic silica prepared by hydrophobizing a silica powder with a hydrophobizing agent and it can be obtained from the market.
Exemplary commercial names of commercially available hydrophobic silica include Nipsil SS-10, SS-40, SS-50, and SS-100 (Tosoh Silica Corporation, "Nipsil" is a registered trademark of Tosoh Silica Corporation), SIPERNAT D-10 (Evonik Degussa Japan Co., Ltd., "SIPERNAT" is a registered trademark of Evonik Degussa GmbH), AEROSIL R972, RX200, and RY200 (Nippon Aerosil Co., Ltd., "AEROSIL" is a registered trademark of Evonik Degussa GmbH), TS-530, TS-610, TS-720 (Cabot Carbon Corporation), AEROSIL R202, R805, and R812 (Degussa Japan Co., Ltd.), REOLOSIL MT-10, DM-10, and DM-20S (Tokuyama Corporation, "REOLOSIL" is a registered trademark of this company), and SYLOPHOBIC100, 702, 505 and 603 (Fuji Silysia Chemical Ltd., "SYLOPHOBIC" is a registered trademark of this company).

The wax (F) includes wax-like substances (natural waxes, synthetic waxes, fats and oils, etc.) that have a melting point of not less than 50°C (preferably 70 to 160°C) and are not dissolved in a polyether compound (B) but are dispersed therein, and at least one member having a melting point within the temperature range of from 70 to 160°C and being selected from the group consisting of petroleum waxes (F1), synthetic waxes (F2), vegetable waxes (F3), and modified waxes (F4) prepared by modifying the foregoing waxes is preferably provided as an example.
The wax (F) does not include bisamides.

Examples of the petroleum waxes (F1) include microcrystalline wax and paraffin wax.
Examples of the synthetic waxes (F2) include Fischer-Tropsch wax and polyethylene wax.
Examples of the vegetable waxes (F3) include carnauba wax and Japan wax.
Examples of the modified waxes (F4) prepared by modifying these waxes include maleic acid-modified oxidized polyethylene wax and oxidized polyethylene wax.

Among these, petroleum waxes (F1) and synthetic waxes (F2) are preferred from the viewpoints of defoamability, etc., more preferably paraffin wax, Fischer-Tropsch wax, and microcrystalline wax, and particularly preferably paraffin wax and Fischer-Tropsch wax.

When the defoaming agent of the present invention contains at least one dispersoid selected from the group consisting of metallic soap (C), synthetic resin (D), hydrophobic silica (E), and wax (F), the mode particle diameter (µm) on a volume basis of the dispersoid (including the bisamide (A)) in the defoaming agent is preferably 0.1 to 10, more preferably 0.1 to 5, and particularly preferably 0.2 to 3.

The defoaming agent of the present invention may further contain an oil (H) in such an amount that the polyether compound (B) and it can be dissolved with each other. Examples of the oil (H) include fats and oils (animal oils and vegetable oils), and mineral oils. The amount in which they are dissolved with each other is determined appropriately depending upon the compositions of the polyether compound (B) and the oil (H) to be used.

The defoaming agent of the present invention may also contain a silicone composition (I) that can be obtained from the market. Examples of the silicone composition (I) include KS-530, KS-537, KS-540 (Shin-Etsu Chemical Co., Ltd.), SH200-100CS, SH200-1000CS, DK Q1-049, FS ANTIFOAM 1266, FS ANTIFOAM 544 COMPOUND (Dow Corning Toray Co., Ltd.), SILFOAM SC370, SILFOAM SC132, SILFOAM SRE (Wacker Asahikasei Silicone Co., Ltd.; "SILFOAM" is a registered trademark of this company), and PULPSIL 50C (Wacker Asahikasei Silicone Co., Ltd.; "PULPSIL" is a registered trademark of this company).

The defoaming agent of the present invention may contain an emulsifying and dispersing agent (J) in order to improve its emulsifying/dispersing property to an aqueous foamable liquid (liquid to be defoamed). Common emulsifiers, dispersing agents and the like can be used as the emulsifying and dispersing agent (J), and examples thereof include fatty acid esters of polyhydric alcohols (e.g., sorbitan fatty acid esters, glycerol aliphatic acid esters, polyglycerol fatty acid esters, and sucrose fatty acid esters), fatty acid esters of polyoxyalkylene compounds (e.g., those in which the proportion accounted for by polyoxyethylene groups among polyoxyalkylene groups is 40 to 100% by weight; polyoxyethylene glycol dilaurate, ethylene oxide adducts of sorbitan fatty acid esters), and alkylene oxide adducts of monohydric or polyhydric alcohols (e.g., those in which the proportion accounted for by oxyethylene groups among polyoxyalkylene groups is 40 to 100% by weight; propylene oxide adducts of polyoxyethylene glycol).

The defoaming agent of the present invention can be produced by the following production methods, for example.
Of these production methods, production methods (1) and (2) are preferred from the viewpoint of defoamabilities and the stability with time of the defoaming agent.

### Production process (1):

A method comprising step (1) of dissolving a bisamide (A) while heating and stirring the bisamide (A) and part of a polyether compound (B), thereby obtaining a solution,
step (2) of feeding the resulting solution into the remainder of the polyether compound (B) while cooling and stirring the remainder, thereby obtaining a fine dispersion of the bisamide (A), and
step (3) of subjecting the resulting fine dispersion to homogenization, thereby obtaining a defoaming agent.

### Production process (2):

A method comprising step (4) of dissolving a bisamide (A) while heating and stirring the bisamide (A), part of a polyether compound (B), and a crystal form controlling agent (G), thereby obtaining a solution,
step (5) of feeding the resulting solution into the remainder of the polyether compound (B) while cooling and stirring the remainder, thereby obtaining a fine dispersion of the bisamide (A), and
step (6) of subjecting the resulting fine dispersion to homogenization, thereby obtaining a defoaming agent.

### Production process (3):

A method comprising step (7) of dissolving a bisamide (A) while heating and stirring the bisamide (A), a polyether compound (B), and a crystal form controlling agent (G), thereby obtaining a solution,
step (8) of cooling and stirring the solution to make the bisamide (A) deposit, thereby obtaining a fine dispersion, and
step (9) of subjecting the resulting fine dispersion to homogenization, thereby obtaining a defoaming agent.

The heating and stirring temperature (°C), which is not limited as long as the bisamide (A) can be dissolved, is preferably 100 to 180, more preferably 110 to 160, particularly preferably 120 to 150, and most preferably 125 to 145.

The time of the heating and stirring, which is not particularly limited as long as the bisamide (A) can be dissolved, is preferably adjusted to be as short as possible in order to prevent oxidation, decomposition and so on of the polyether compound (B).

The heating and stirring may be carried out under sealing (and optionally pressurizing) or alternatively under opening. In order to prevent oxidation or decomposition of the bisamide (A) and the polyether compound (B), it is preferred to carry out them under sealing or under an inert gas atmosphere.

In the step (2) of the production method (1) and in the step (5) of the production method (2), it is preferred to maintain the state where the bisamide (A) has been dissolved by heating and stirring the solution also during the feed of the solution.
In addition, it is preferred, from the viewpoints of defoamability (the mode in the particle size distribution on volume basis of dispersed particles) and production cost, to maintain the temperature of the remainder of the polyether compound (B) at 0 to 40°C, more preferably at 0 to 35°C, particularly preferably at 0 to 30°C, and most preferably at 0 to 25°C.
That is, it is preferred in step (2) to obtain a mixture by feeding the solution in small portions to the remainder of the polyether compound (B) cooled to 0 to 40°C while maintaining the remainder at 0 to 40°C.

While the homogenization has no limitations as long as it can homogenize a dispersion liquid containing a fine dispersion of the bisamide (A), it is preferred to perform the homogenization by using an emulsification/dispersion machine (e.g., a bead mill, a Disper mill, a homogenizer, or a Gaulin homogenizer).

When using a crystal form controlling agent (G), it is preferred to uniformly mix it during or just before step (1), step (4), or step (7). The crystal form controlling agent (G) does not demonstrate its effects if it is added and mixed after cooling the solution.

When using a synthetic resin (D), hydrophobic silica (E) and/or an oil (H), they or it may be fed in any of the above-mentioned steps and they or it may also be mixed uniformly just before or just after step (3).

When using a metallic soap (C) and/or a wax (F), they or it may be dissolved together with bisamide (A) in step (1) of dissolving the bisamide (A) or alternatively they or it may be mixed uniformly just before or just after step (3) after being finely dispersed in polyether compound (B) aside from the bisamide (A).

The defoaming agent of the present invention is effective for an aqueous foamable liquid and can be used as, for example, a defoaming agent for paint (water-based paint and the like), and a defoaming agent for various production processes (a paper-making process, a fermentation process, an incubation process, a waste water treatment process, a monomer stripping process, a polymer polymerization process, and so on).
Among these, it is suited as a defoaming agent for paint and a defoaming agent for waste water treatment, more suited as a defoaming agent for water-based paint, and it is best-suited as a defoaming agent for emulsion paint among water-based paints (paint for water-based building exterior decoration, paint for building interior decoration, water-based ink, paint of paper coating, and so on).

Examples of the binder contained in emulsion paint include vinyl acetate resin, acrylic resin, styrene resin, halogenated olefin resin, urethane resin, silicone resin, and fluorine atom-containing silicone resin, and it is effective for any one.

The emulsion paint of the present invention comprises a resin emulsion, a pigment, an aqueous medium, and the aforementioned defoaming agent.

The resin emulsion includes the binder contained in the above-mentioned emulsion paint. The pigment includes conventionally known pigments (for example, those disclosed in pages 333 to 447 of "Paint Raw Material Manual, 8th Ed." edited and published by Japan Paint Manufacturers Association). The aqueous medium includes water (tap water, deionized water, etc.).

The water-based paint of the present invention is obtained in a way similar to conventional production methods.

The waste water treatment method of the present invention comprises a step of adding the above-described defoaming agent to waste water to treat the waste water.

The waste water includes household waste water (domestic waste water, excrement waste water, etc.) and industrial waste water (including recycled waste water).

The waste water treatment method of the present invention can be applied to both conventional aerobic treatment and anaerobic treatment.

The method for adding the defoaming agent of the present invention, in the case of applying it to paint, includes (1) a method of adding it at the time of feeding a mill base, (2) a method of adding it at the time of prekneading for dispersing a pigment uniformly, (3) a method of adding it at the time of dispersing a pigment, (4) a method of adding it at the time of blending to feed and mix the remaining raw materials, and/or (5) a method of adding it after the preparation of paint. Moreover, when applying it to various production processes, the method may be any of the methods to add it (1) at the same time as the feed of raw materials, (2) before heating and/or pressure reduction treatment, and/or (3) during a final finishing step or the like. For example, when applying to a waste water treatment process, it may be added to an inflow of the waste water (before an aerator), before separation (before a sedimentation tank), to finishing (discharge), or the like.

When applying to various production processes, the added amount (% by weight) of the defoaming agent of the present invention is preferably 0.0001 to 3, more preferably 0.001 to 2.7, particularly preferably 0.005 to 2.3, and most preferably 0.01 to 2 based on the weight of an aqueous foamable liquid. When applying to paint, the added amount (% by weight) of the defoaming agent of the present invention is preferably 0.05 to 3, more preferably 0.1 to 2.7, particularly preferably 0.2 to 2.3, and most preferably 0.3 to 2.0 based on the weight of the paint.

Moreover, when applying to emulsion paint, which is best suited, the added amount (% by weight) of the defoaming agent of the present invention is preferably 0.05 to 3, more preferably 0.1 to 2.7, particularly preferably 0.2 to 2.3, and most preferably 0.3 to 2 based on the weight of the paint.

### EXAMPLS

The present invention will be described below in more detail by examples, but the present invention is not limited to them. Unless otherwise stated, part(s) and % mean part(s) by weight and % by weight, respectively.

The mode (µm) in particle diameter distribution on volume basis was determined by doing blank measurement by using a laser diffraction/scattering type particle size distribution analyzer Partica LA-950V2 (batch cell type, the index of refraction of the dispersoid: 1.46, the number of repetition: 15, manufactured by HORIBA, Ltd.) with a dispersing medium being placed in the batch cell, then adding an appropriate amount of a defoaming agent to the dispersing medium and continuing mixing until the mixture becomes uniform while preventing bobbles from getting in, doing measurement, and then calculating the mode by subtracting the blank measurement value from this measured value. As to the dispersing medium, those which do not allow flocculation or dissolution to occur were selected according to the type of the bisamide (A) and the polyether compound (B) to be measured and those described in respective Examples were used. As to the indexes of refraction of the dispersing media used for calculation, the values disclosed in the Examples were used.
The amounts of the defoaming agents were adjusted so that the transmittance of blue LED light might be 89 to 91%; since the larger the amount of a defoaming agent, the lower the transmittance, the transmittance was adjusted to fall within that range through the adjustment of the amount of a defoaming agent or a dispersing medium if the transmittance had been out of the range.

### <Example 1>

In a container capable of heating, stirring, and cooling, 45 parts of bisamides (a1) (ALFLOW AD-281F, produced by NOF Corporation, ethylene bisoleylamide), 100 parts of polyether compounds (b1) (NEWPOL PE-61, produced by Sanyo Chemical Industries, Ltd., polyoxyethylene (5 mol)-polyoxypropylene (30 mol) block polymer; "NEWPOL" is a registered trademark of that company.), and 200 parts of polyether compound (b2) (sucrose-polyoxypropylene 80 mol adduct) were increased in temperature to 125°C under heating and stirring, and then heating and stirring were continued for additional 15 minutes at that temperature, so that bisamide solution (1) was obtained.

Subsequently, while 150 parts of the polyether compound (b1) and 505 parts of the polyether compound (b2) were cooled and stirred under adjustment to 5°C, the bisamide solution (1) was added thereto in small portions, followed by stirring for 15 minutes, so that dispersion liquid (1) was obtained. The temperature of the mixture (dispersion liquid) during the addition of the bisamide solution and that after the addition were 5 to 25°C.

The dispersion liquid (1) was stirred to homogenize at 4000 rpm for 15 minutes by using an Excel Auto Homogenizer (manufactured by Nihonseiki Kaisha Ltd.) equipped with an impeller type blade, so that defoaming agent (1) of the present invention was obtained. The mode (µm) in the particle diameter distribution on a volume basis of the dispersion was 3.2 µm (SANNIX GP-3000 (produced by Sanyo Chemical Industries, Ltd., propylene oxide (43 mol) adduct of glycerol, index of refraction: 1.44) was used as the dispersing medium for the particle diameter distribution measurement).

### <Example 2>

In a container capable of heating, stirring, and cooling, 30 parts of bisamide (a2) {ITOHWAX J-630, produced by Itoh Oil Chemicals Co., Ltd., hexamethylene bishydroxystearylamide} and 300 parts of polyether compound (b3) (SANNIX GP-3000, produced by Sanyo Chemical Industries, Ltd., propylene oxide (43 mol) adduct of glycerol); "SANNIX" is a registered trademark of that company) were brought to 145°C under heating and stirring, and then heating and stirring were continued for additional 15 minutes at that temperature, so that bisamide solution (2) was obtained.

Subsequently, while 670 parts of the polyether compound (b3) adjusted to 5°C was cooled and stirred, the bisamide solution (2) was added thereto in small portions, followed by stirring for 15 minutes, so that dispersion liquid (2) was obtained. The temperature of the mixture (dispersion liquid) during the addition of the bisamide solution and that after the addition were 5 to 35°C.

The dispersion liquid (2) was subjected to homogenization at 3500 psi (24.1 MPa) using a Gaulin Homogenizer (manufactured by Manton Gaulin Co.), so that defoaming agent (2) of the present invention was obtained. The mode (µm) in the particle diameter distribution on a volume basis of the dispersion was 0.7 µm (SANNIX GP-3000 (index of refraction: 1.44) was used as the dispersing medium for the particle diameter distribution measurement).

### <Example 3>

In a container capable of heating, stirring, and cooling, 30 parts of bisamide (a3) {ALFLOW H-50S, produced by NOF Corporation, ethylene bisstearylamide} and 300 parts of polyether compound (b4) (NEWPOL TL-4500N, produced by Sanyo Chemical Industries, Ltd., ethylene oxide (10 mol)/propylene oxide (68 mol) block adduct of trimethylolpropane) were brought to 145°C under heating and stirring, and then heating and stirring were continued for additional 15 minutes at that temperature, so that bisamide solution (3) was obtained.

Subsequently, while 620 parts of polyether compounds (b4) and 50 parts of polyether compound (b5) (NEWPOL GP-600, produced by Sanyo Chemical Industries, Ltd., propylene oxide (9 mol) adduct of glycerol) were cooled and stirred under adjustment to 5°C, the bisamide solution (3) was added thereto in small portions, followed by stirring for 15 minutes, so that dispersion liquid (3) was obtained. The temperature of the mixture (dispersion liquid) during the addition of the bisamide solution and that after the addition were 5 to 40°C.

The dispersion liquid (3) was subjected to homogenization at 3500 psi (24.1 MPa) using a Gaulin Homogenizer (manufactured by Manton Gaulin Co.), so that defoaming agent (3) of the present invention was obtained. The mode (µm) in the particle diameter distribution on a volume basis of the dispersion was 0.3 µm (acetone (index of refraction: 1.36) was used as the dispersing medium for the particle diameter distribution measurement).

### <Example 4>

In a container capable of heating, stirring, and cooling, 20 parts of bisamide (a1) and 300 parts of polyether compound (b6) (NEWPOL LB-1715, produced by Sanyo Chemical Industries, Ltd., polyoxypropylene (40 mol) adduct of butanol) were brought to 125°C under heating and stirring, and then heating and stirring were continued for additional 15 minutes at that temperature, so that bisamide solution (4) was obtained.

Subsequently, while 592 parts of the polyether compound (b6) adjusted to 5°C was cooled and stirred, the bisamide solution (4) was added thereto in small portions, followed by stirring for 15 minutes, so that dispersion liquid (4) was obtained. The temperature of the mixture (dispersion liquid) during the addition of the bisamide solution and that after the addition were 5 to 35°C.

The dispersion liquid (4) was subjected to homogenization at 3500 psi (24.1 MPa) using a Gaulin Homogenizer, and then synthetic resin (d1) prepared in accordance with Example 1 of JP 2009-7506 A {a mixed liquid of 75 parts of {a copolymer (particle diameter: 0.7 µm) containing (styrene)/(acrylonitrile)/(divinylbenzene)/(a reactive dispersing agent obtainable by jointing a propylene oxide adduct of glycerol and 2-hydroxyethyl methacrylate with tolylene diisocyanate (TDI))/(polyoxyalkylene ether prepared by adding propylene oxide (PO) to allyl alcohol) as constituent units}, 83.6 parts of polyether (b7) {a polyol having a hydroxyl value of 32 prepared by block adding alkylene oxides to pentaerythritol in the order of propylene oxide first and then ethylene oxide (the proportion of ethylene oxide: 12% by weight)}, and 4.4 parts of polyether (b8) {a propylene oxide adduct of glycerol prepared in accordance with JP 2000-344881 A, hydroxyl value: 56}} was added, followed by stirring for 15 minutes, so that defoaming agent (4) of the present invention was obtained. The mode (µm) in the particle diameter distribution on a volume basis of the dispersion was 2.1 µm (SANNIX GP-3000 (index of refraction: 1.44) was used as the dispersing medium for the particle diameter distribution measurement).

### <Example 5>

In a container capable of heating, stirring, and cooling, 15 parts of bisamide (a4) {ITOHWAX J-530, produced by Itoh Oil Chemicals Co., Ltd., ethylene bis(12-hydroxystearyl)amide}, 100 parts of polyether compound (b4), 250 parts of polyether compound (b6), and 14.3 parts of crystal form controlling agent (g1) {TAYCAPOWER BC2070M, produced by Tayca Corporation, calcium dodecylbenzenesulfonate (70% methanol solution)} (calcium dodecylbenzenesulfonate accounted for 10 parts and the remainder was methanol) were brought to 145°C under heating and stirring, and then heating and stirring were continued for additional 15 minutes at that temperature, so that bisamide solution (5) was obtained.

Subsequently, while 635 parts of the polyether compound (b6) adjusted to 5°C was cooled and stirred, the bisamide solution (5) was added thereto in small portions, followed by stirring for 15 minutes, so that dispersion liquid (5A) was obtained. The temperature of the mixture (dispersion liquid) during the addition of the bisamide solution and that after the addition were 5 to 38°C.

The dispersion liquid (5A) was subjected to homogenization at 3500 psi (24.1 MPa) using a Gaulin Homogenizer (manufactured by Manton Gaulin Co.), so that dispersion liquid (5B) was obtained. The mode (µm) in the particle diameter distribution on a volume basis of the dispersion of the dispersion liquid (5B) was 2.8 (acetone (index of refraction: 1.36) was used as the dispersing medium for the particle diameter distribution measurement).

Three parts of hydrophobic silica (e1) {SIPERNAT D 10, produced by Evonik Degussa Japan Co., Ltd., hydrophobic silica) were added to the dispersion liquid (5B), followed by homogenization at 3500 psi (24.1 MPa) using a Gaulin Homogenizer (manufactured by Manton Gaulin Co.), so that defoaming agent (5) of the present invention was obtained. The mode (µm) in the particle diameter distribution on a volume basis of the dispersion was 8.3 (acetone (index of refraction: 1.36) was used as the dispersing medium for the particle diameter distribution measurement).

### <Example 6>

In a container capable of heating, stirring, and cooling, 26 parts of bisamide (a5) {KAOWAX EB-P, produced by Kao Corp., ethylene bisstearylamide}, and 146 parts of polyether compounds (b1), 146 parts of polyether compounds (b6), 10 parts of metallic soap (c1) {SA-1500, produced by Sakai Chemical Industry Co., Ltd., aluminum stearate}, and 8.33 parts of crystal form controlling agent (g2) {SULFOL 430A, produced by MORESCO Corporation, sodium petroleum sulfonate (60% solution)} (sodium petroleum sulfonate accounted for 5 parts and the remainder was unknown) were brought to 145°C under heating and stirring, and then heating and stirring were continued for additional 15 minutes at that temperature, so that bisamide solution (6) was obtained.

Subsequently, while 341 parts of the polyether compound (b1) and 341 parts of the polyether compound (b6) were cooled and stirred under adjustment to 5°C, the bisamide solution (6) was added thereto in small portions, followed by stirring for 15 minutes, so that dispersion liquid (6) was obtained. The temperature of the mixture (dispersion liquid) during the addition of the bisamide solution and that after the addition were 5 to 36°C.

The dispersion liquid (6) was subjected to homogenization at 3500 psi (24.1 MPa) using a Gaulin Homogenizer (manufactured by Manton Gaulin Co.), so that defoaming agent (6) of the present invention was obtained. The mode (µm) in the particle diameter distribution on a volume basis of the dispersion was 0.5 µm (acetone (index of refraction: 1.36) was used as the dispersing medium for the particle diameter distribution measurement).

### <Example 7>

In a container capable of heating, stirring, and cooling, 30 parts of bisamide (a3),194 parts of polyether compound (b6), 194 parts of polyether compound (b9) {NEWPOL LB-625, produced by Sanyo Chemical Industries, Ltd., polyoxypropylene (33 mol) adduct of butanol}, and 7.1 parts of crystal form controlling agent (g1) (calcium dodecylbenzenesulfonate accounted for 5 parts and the remainder was methanol) were brought to 145°C under heating and stirring, and then heating and stirring were continued for additional 15 minutes at that temperature, so that bisamide solution (7) was obtained.

Subsequently, while 291 parts of the polyether compound (b6) and 291 parts of the polyether compound (b9) were cooled and stirred under adjustment to 55°C, the bisamide solution (7) was added thereto in small portions, followed by stirring for 15 minutes, so that dispersion liquid (7) was obtained. The temperature of the mixture (dispersion liquid) during the addition of the bisamide solution and that after the addition were 5 to 36°C.

The dispersion liquid (7) was subjected to homogenization at 3500 psi (24.1 MPa) using a Gaulin Homogenizer (manufactured by Manton Gaulin Co.), so that defoaming agent (7) of the present invention was obtained. The mode (µm) in the particle diameter distribution on a volume basis of the dispersion was 0.2 µm (acetone (index of refraction: 1.36) was used as the dispersing medium for the particle diameter distribution measurement).

### <Example 8>

In a container capable of heating, stirring, and cooling, 30 parts of bisamide (a3), 272 parts of polyether compound (b2), 116 parts of polyether compound (b10) {NEWPOL PP-2000, produced by Sanyo Chemical Industries, Ltd., polypropylene glycol (34 mol)}, and 1.67 parts of crystal form controlling agent (g2) (sodium petroleum sulfonate accounted for 1 part and the remainder was unknown) were brought to 145°C under heating and stirring, and then heating and stirring were continued for additional 15 minutes at that temperature, so that bisamide solution (8) was obtained.

Subsequently, while 407 parts of the polyether compound (b2) and 175 parts of the polyether compound (b10) were cooled and stirred under adjustment to 25°C, the bisamide solution (8) was added thereto in small portions, followed by stirring for 15 minutes, so that dispersion liquid (8) was obtained. The temperature of the mixture (dispersion liquid) during the addition of the bisamide solution and that after the addition were 25 to 64°C.

The dispersion liquid (8) was subjected to homogenization at 3500 psi (24.1 MPa) using a Gaulin Homogenizer (manufactured by Manton Gaulin Co.), so that defoaming agent (8) of the present invention was obtained. The mode (µm) in the particle diameter distribution on a volume basis of the dispersion was 0.4 µm (acetone (index of refraction: 1.36) was used as the dispersing medium for the particle diameter distribution measurement).

### <Example 9>

In a container capable of heating, stirring, and cooling, 30 parts of bisamide (a3), 272 parts of polyether compound (b4), 116 parts of polyether compound (b6), and 10 parts of crystal form controlling agent (g3) (SULFOL BA-30N, produced by MORESCO Corporation, barium petroleum sulfonate (30% solution)) (barium petroleum sulfonate accounted for 3 parts and the remainder was unknown) were brought to 145°C under heating and stirring, and then heating and stirring were continued for additional 15 minutes at that temperature, so that bisamide solution (9) was obtained.

Subsequently, while 407 parts of the polyether compound (b4) and 175 parts of the polyether compound (b6) were cooled and stirred under adjustment to 25°C, the bisamide solution (9) was added thereto in small portions, followed by stirring for 15 minutes, so that dispersion liquid (9) was obtained. The temperature of the mixture (dispersion liquid) during the addition of the bisamide solution and that after the addition were 25 to 66°C.

The dispersion liquid (9) was subjected to homogenization at 3500 psi (24.1 MPa) using a Gaulin Homogenizer (manufactured by Manton Gaulin Co.), so that defoaming agent (9) of the present invention was obtained. The mode (µm) in the particle diameter distribution on a volume basis of the dispersion was 0.4 µm (acetone (index of refraction: 1.36) was used as the dispersing medium for the particle diameter distribution measurement).

### <Example 10>

In a container capable of heating, stirring, and cooling, 10 parts of bisamide (a5), 350 parts of polyether compound (b6), and 5 parts of crystal form controlling agent (g4) (Cation S, produced by Sanyo Chemical Industries, Ltd., stearyl konium chloride) were brought to 145°C under heating and stirring, and then heating and stirring were continued for additional 15 minutes at that temperature, so that bisamide solution (10) was obtained.

Subsequently, while 640 parts of the polyether compound (b6) adjusted to 25°C was cooled and stirred, the bisamide solution (10) was added thereto in small portions, followed by stirring for 15 minutes, so that dispersion liquid (10) was obtained. The temperature of the mixture (dispersion liquid) during the addition of the bisamide solution and that after the addition were 25 to 70°C.

The dispersion liquid (10) was subjected to homogenization at 3500 psi (24.1 MPa) using a Gaulin Homogenizer (manufactured by Manton Gaulin Co.), so that defoaming agent (10) of the present invention was obtained. The mode (µm) in the particle diameter distribution on a volume basis of the dispersion was 0.4 µm (acetone (index of refraction: 1.36) was used as the dispersing medium for the particle diameter distribution measurement).

### <Example 11>

In a container capable of heating, stirring, and cooling, 30 parts of bisamide (a5), 600 parts of polyether compound (b6), 370 parts of polyether compound (b11) {NEWPOL LB-385, produced by Sanyo Chemical Industries, Ltd., polyoxypropylene (27 mol) adduct of butanol}, and 50 parts of crystal form controlling agent (g2) (sodium petroleum sulfonate accounted for 30 parts and the remainder was unknown) were brought to 145°C under heating and stirring, and then heating and stirring were continued for additional 15 minutes at that temperature, so that bisamide solution (11) was obtained.

Subsequently, the bisamide solution (11) was cooled to 25°C over 5 minutes under stirring, so that dispersion liquid (11) was obtained.

The dispersion liquid (11) was subjected to homogenization at 3500 psi (24.1 MPa) using a Gaulin Homogenizer (manufactured by Manton Gaulin Co.), so that defoaming agent (11) of the present invention was obtained. The mode (µm) in the particle diameter distribution on a volume basis of the dispersion was 4.9 µm (acetone (index of refraction: 1.36) was used as the dispersing medium for the particle diameter distribution measurement).

### <Example 12>

In a container capable of heating, stirring, and cooling, 75 parts of bisamide (a3), 3 parts of wax (f1) (Epolene E-10, produced by Eastman Chemical Co., oxidized polyethylene wax), 200 parts of polyether compound (b12) {oleate of polyoxypropylene (40 mol) glycol monobutyl ether}, and 250 parts of polyether compound (b13) (polyoxypropylene (50 mol) adduct of butanol) were brought to 145°C under heating and stirring, and then heating and stirring were continued for additional 15 minutes at that temperature, so that bisamide solution (12) was obtained.

Subsequently, while 200 parts of the polyether compound (b12) and 275 parts of the polyether compound (b13) were cooled and stirred under adjustment to 5°C, the bisamide solution (12) was added thereto in small portions, followed by stirring for 15 minutes, so that dispersion liquid (12A) was obtained. The temperature of the mixture (dispersion liquid) during the addition of the bisamide solution and that after the addition were 5 to 40°C.

The dispersion liquid (12A) was subjected to homogenization at 3500 psi (24.1 MPa) using a Gaulin Homogenizer (manufactured by Manton Gaulin Co.), so that dispersion liquid (12B) was obtained. The mode (µm) in the particle diameter distribution on a volume basis of the dispersion was 0.6 µm (acetone (index of refraction: 1.36) was used as the dispersing medium for the particle diameter distribution measurement).

The dispersion liquid (12B) was heated and stirred at 70°C for 1 hour, so that defoaming agent (12) of the present invention was obtained. The mode (µm) in the particle diameter distribution on a volume basis of the dispersion was 1.8 µm (acetone (index of refraction: 1.36) was used as the dispersing medium for the particle diameter distribution measurement).

### <Example 13>

In a container capable of heating, stirring, and cooling, 20 parts of bisamide (a5), 30 parts of wax (f2) {FT-105, product made by Nippon Seiro Co., Ltd., Fischer-Tropsch wax}, 200 parts of polyether compound (b3), 200 parts of polyether compound (b6), 20 parts of crystal form controlling agent (g3) (barium petroleum sulfonate accounted for 6 parts and the remainder was unknown), and 30 parts of oil (h1) (edible rapeseed oil, produced by Nikko Seiyu Co., rapeseed oil) were brought to 145°C under heating and stirring, and then heating and stirring were continued for additional 15 minutes at that temperature, so that bisamide solution (13) was obtained.

Subsequently, while 200 parts of the polyether compound (b6), 280 parts of polyether compound (b14) {distearate of polyether compound (b1)}, and 100 parts of polyether compound (b15) {oleate of a propylene oxide (30 mol) adduct of castor oil} were cooled and stirred under adjustment to 5°C, the bisamide solution (13) was added thereto in small portions, followed by stirring for 15 minutes, so that dispersion liquid (13) was obtained. The temperature of the mixture (dispersion liquid) during the addition of the bisamide solution and that after the addition were 5 to 37°C.

The dispersion liquid (13) was subjected to homogenization at 3500 psi (24.1 MPa) using a Gaulin Homogenizer, so that defoaming agent (13) of the present invention was obtained. The mode (µm) in the particle diameter distribution on a volume basis of the dispersion was 0.3 µm.

### <Example 14>

In a container capable of heating, stirring, and cooling, 25 parts of bisamide (a3) and 300 parts of polyether compound (b16) {ethylene oxide (3 mol)/{2-ethylhexyl glycidyl ether (6 mol) block adduct of glycerol} were brought to 145°C under heating and stirring, and then heating and stirring were continued for additional 15 minutes at that temperature, so that bisamide solution (14) was obtained.

Subsequently, while 275 parts of polyether compound (b12), 300 parts of polyether compound (b14), and 100 parts of polyether compound (b17) {a polyether compound obtained by reacting 200 parts of polyoxypropylene (34 mol) glycol, 231 parts of polyoxyethylene (3 mol) polyoxypropylene (14 mol) myristyl ether, and 16.8 parts of hexamethylene diisocyanate together} were cooled and stirred under adjustment to 2°C, the bisamide solution (14) was added thereto in small portions, followed by stirring for 15 minutes, so that dispersion liquid (14) was obtained. The temperature of the mixture (dispersion liquid) during the addition of the bisamide solution and that after the addition were 2 to 29°C.

The dispersion liquid (14) was subjected to homogenization at 3500 psi (24.1 MPa) using a Gaulin Homogenizer, so that defoaming agent (14) of the present invention was obtained. The mode (µm) in the particle diameter distribution on a volume basis of the dispersion was 0.5 µm.

### <Example 15>

In a container capable heating, stirring, and cooling, 1 part of bisamide (a3) and 300 parts of polyether compound (b6) were brought to 145°C under heating and stirring, and then heating and stirring were continued for additional 15 minutes at that temperature, so that bisamide solution (15) was obtained.

Subsequently, while 699 parts of the polyether compound (b6) adjusted to 5°C was cooled and stirred, the bisamide solution (15) was added thereto in small portions, followed by stirring for 15 minutes, so that dispersion liquid (15) was obtained. The temperature of the mixture (dispersion liquid) during the addition of the bisamide solution and that after the addition were 5 to 30°C.

The dispersion liquid (15) was subjected to homogenization at 3500 psi (24.1 MPa) using a Gaulin Homogenizer, so that defoaming agent (15) of the present invention was obtained. The mode (µm) in the particle diameter distribution on a volume basis of the dispersion was 0.2 µm.

### <Comparative Examples 1 to 4>

Comparative defoaming agents (H1) to (H4) were prepared in the same ways as Examples 1 to 3 and 7 except for failing to use bisamides (a1) to (a3) (Comparative Example 1, Comparative Example 2, Comparative Example 3, and Comparative Example 4 correspond to Example 1, Example 2, Example 3 and Example 7, respectively).

### <Comparative Example 5>

In a container capable of heating, stirring, and cooling, 30 parts of bisamide (a1), 200 parts of polyether compound (b6), and 770 parts of polyether compound (b11) were brought to 140°C while being heated and stirred, and then heating and stirring were continued for additional 15 minutes at that temperature, so that bisamide solution (h5) was obtained.

Subsequently, the bisamide solution (h5) was cooled to 25°C over 90 minutes, so that dispersion liquid (h5) was obtained.

The dispersion liquid (h5) was stirred to homogenize at 10000 rpm for 10 minutes by using an Excel Auto Homogenizer (manufactured by Nihonseiki Kaisha Ltd.) equipped with an impeller type blade, so that comparative defoaming agent (H5) was obtained. The mode (µm) in the particle diameter distribution on a volume basis of the dispersion was 14.9 µm.

### <Comparative Example 6>

In a container capable of heating, stirring, and cooling, 30 parts of bisamide (a1), 200 parts of polyether compound (b1), and 770 parts of polyether compound (b2) were brought to 140°C while being heated and stirred, and then heating and stirring were continued for additional 15 minutes at that temperature, so that bisamide solution (h6) was obtained.

Subsequently, the bisamide solution (h6) was cooled to 25°C over 15 minutes under stirring, so that dispersion liquid (h6) was obtained.

The dispersion liquid (h6) was stirred to homogenize at 10000 rpm for 10 minutes by using an Excel Auto Homogenizer (manufactured by Nihonseiki Kaisha Ltd.) equipped with an impeller type blade, so that comparative defoaming agent (H6) was obtained. The mode (µm) in the particle diameter distribution on a volume basis of the dispersion was 11.3 µm.

### <Evaluation of defoamability (1)>

Using the defoaming agents (1) to (15) and (H1) to (H6) obtained in Examples 1 to 15 and Comparative Examples 1 to 6, defoamability was evaluated as follows and the evaluation results are shown in Table 1.

### (1) Preparation of evaluation liquid

To a 100-ml graduated cylinder with a stopper was added 25 g of ACRONAL 295DN (an acrylic emulsion produced by BASF; "ACRONAL" is a registered trademark of BASF Aktiengesellschaft), which was then diluted to twice with tap water to mix uniformly, and subsequently 0.075 g of a defoaming agent was added and adjusted to 25°C, so that an emulsion was prepared.
A blank emulsion was prepared in the same as above except for failing to add a defoaming agent.

### (2) Evaluation of defoamability (25°C)

A graduated cylinder was plugged and an emulsion was shaken 200 times in one minute, and then was read the liquid level height (mm) after a lapse of one minute from the shaking, which was considered as the value of initial defoamability. The lower the liquid level height is, the more foams have been broken and therefore the better the defoamability is considered to be (the liquid level height is 50 mm in a state without foams; the liquid level height of the time when the graduated cylinder has been filled with foams is 100 mm).
Then, a cycle including 200 shakes in one minute and subsequent one-minute standing was repeated four times, and the liquid level height after the fifth standing (after 1000 shakes in total) was read, which was considered as the value of durable defoamability.

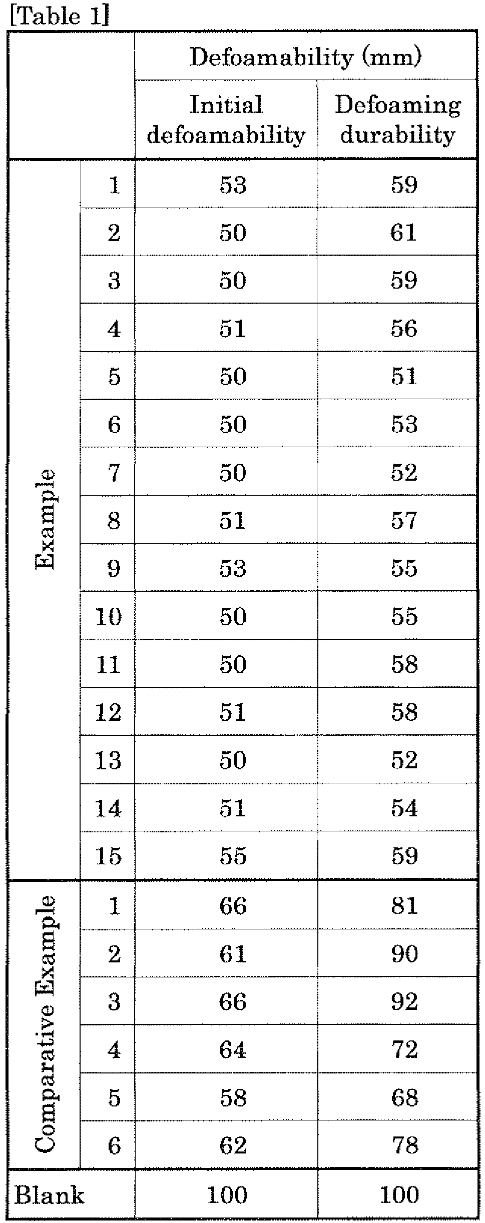

The emulsions using the defoaming agents of the present invention were very superior in defoamabilities (initial defoamability and defoaming durability) to those using the comparative defoaming agents.

### <Evaluation of defoamability (2)>

Using the defoaming agents (1) to (15) and (H1) to (H6) obtained in Examples 1 to 15 and Comparative Examples 1 to 6, defoamability for the emulsion paints prepared in the manner described below was evaluated, and the evaluation results are shown in Table 3.

### (1) Preparation of emulsion base paint

Grinding and letting down were performed with the following raw material compositions by using an EXCEL-AUTO HOMOGENIZER (Nihonseiki Co., Ltd., Model ED) equipped with an impeller-type blade to form paints. The resulting paint was diluted with water to 80 KU (25°C) using a Stormer viscometer (JIS K5600-2-2), so that an emulsion-based paint was obtained.

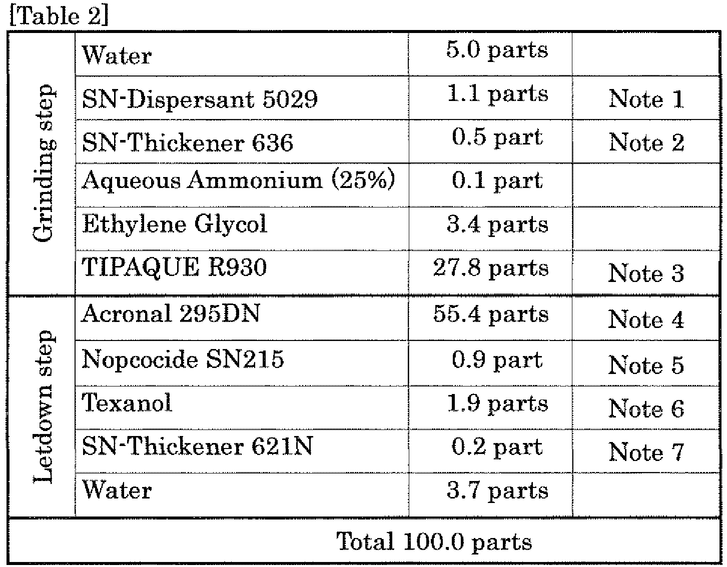

Note 1: A dispersing agent produced by SAN NOPCO Ltd.
Note 2: A thickener produced by SAN NOPCO Ltd.
Note 3: Titanium dioxide produced by Ishihara Sangyo Kaisha, Ltd.
Note 4: An acrylic emulsion produced by BASF; "ACRONAL" is a registered trademark of BASF Aktiengesellschaft.
Note 5: An antiseptic produced by SAN NOPCO Ltd.
Note 6: Film conditioner produced by Eastman Chemical Co.; "Texanol" is a registered trademark of YOSHTMURA OIL CHEMICAL Co., Ltd.
Note 7: A thickener produced by SAN NOPCO Ltd.

### (2) Preparation of emulsion paint

Evaluation samples (defoaming agents) were added to emulsion-based paints to 0.3% by weight (based on the emulsion-based paints) and were stirred and mixed at 25°C, 4000 rpm, for three minutes with an Excel Auto Homogenizer equipped with an impeller type blade, so that emulsion paints (1) to (21) were obtained. In addition, emulsion paint (22) was obtained for blank in the same way except for failing to add a defoaming agent.

### (3) Evaluation of defoamability (25°C)

After 15 seconds since the preparation of the emulsion paints (1) to (22) by stirring and mixing, the specific gravities of the emulsion paints (1) to (22) entraining foams were measured with 50-ml specific gravity cups. It is considered that the larger a specific gravity is, the more entrained foams have been broken and the better the defoamability is.

### (4) Evaluation after aging

The emulsion paints (1) to (22) were stored each separately in a hermetic sample container at rest at 40°C for one month, and then were stirred and mixed again at 25°C, 4000 rpm for 3 minutes by using an EXCEL-AUTO HOMOGENIZER equipped with an impeller-type blade, so that emulsion paints for aging evaluation were obtained and their defoamability (defoaming durability) was evaluated in the same manner.

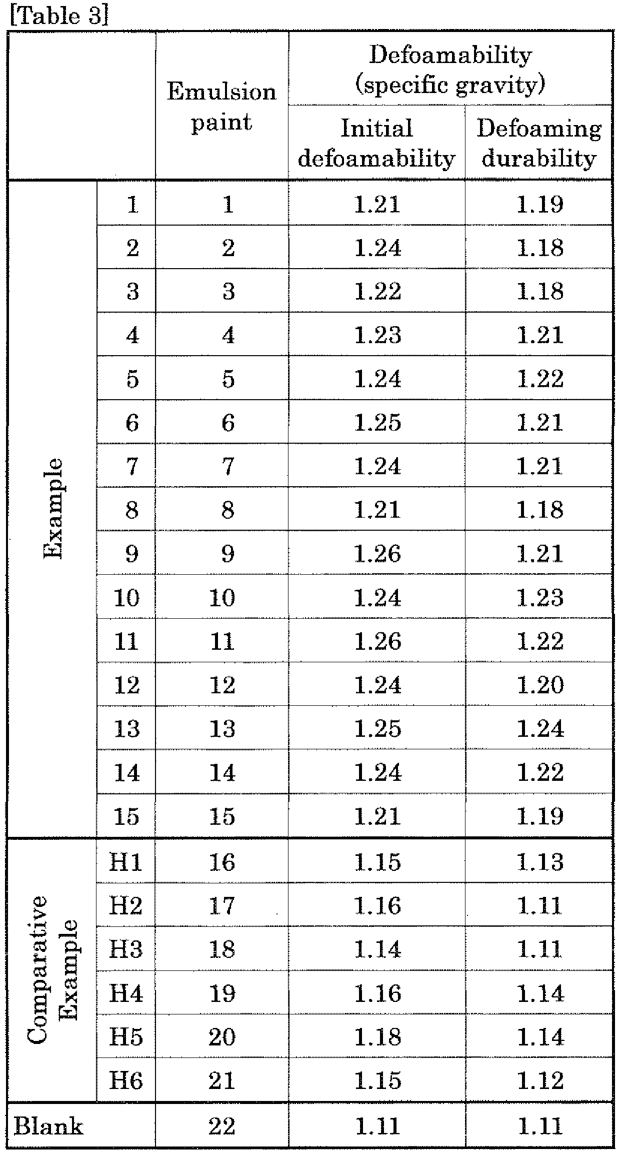

The emulsion paints using the defoaming agents of the present invention were very superior in defoamabilities (initial defoamability and defoaming durability) to those using the comparative defoaming agents.

### <Evaluation of defoamability (3)>

Using the defoaming agents (1) to (3), (7) and (H1) to (H4) obtained in Examples 1 to 3, 7 and Comparative Examples 1 to 4, defoamability was evaluated as follows and the evaluation results are shown in Table 4.

An aqueous surfactant solution containing 0.25% of a nonionic surfactant [SAN NOPCO Ltd., SN Wet L], 0.50% of an anionic surfactant [SAN NOPCO Ltd., SN Wet 970] and 99.875% of water was used as a liquid to be foamed. To a 100-ml graduated cylinder with a stopper were added 50 g of the aqueous solution and further 0.37 g of an evaluation sample (a defoaming agent), followed by adjustment to 30°C, so that a defoaming test liquid was prepared.
A graduated cylinder was plugged and a defoaming test liquid was shaken 200 times for one minute, and then was read the liquid level height (mm) after a lapse of one minute from the shaking, which was considered as the value of defoamability. The lower the liquid level height is, the more foams have been broken and therefore the better the defoamability is considered to be (the liquid level height is 50 mm in a state without foams; the liquid level height of the time when the graduated cylinder has been filled with foams is 100 mm).
In addition, a blank test was carried out in the same as above except for failing to add a defoaming agent.

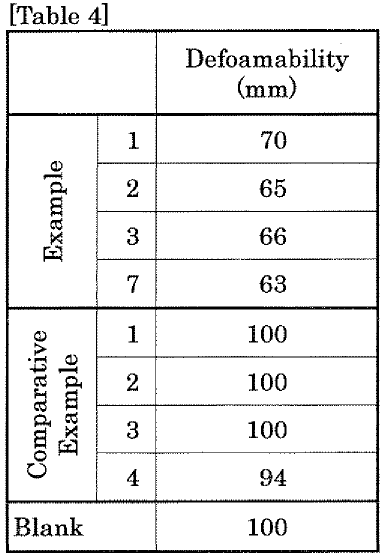

The defoaming agents of the present invention were very superior in defoamabilities for aqueous surfactant solutions in comparison to the comparative defoaming agents.

### <Evaluation of defoamability (4)>

Using the defoaming agents (1) to (15) and (H1) to (H6) obtained in Examples 1 to 15 and Comparative Examples 1 to 6, defoamability was evaluated as follows and the evaluation results are shown in Table 5.

To waste water from a dye works (test water extracted from an aeration tank of an activated sludge treatment process) an evaluation sample was added so that the concentration of the evaluation sample (defoaming agent) might become to 200 ppm, and then by the use of a circulation-type defoaming testing machine (a testing machine in which test water is added to a glass cylinder 3.5 cm in diameter and 21 cm in length and the test water is pumped up from the bottom and then dropped from the top of the cylinder; flow rate: 1 L/minute; the circulation head: 18 cm in the state containing no foams) the time until the test water overflowed from the testing machine was measured (test water temperature: 34°C).

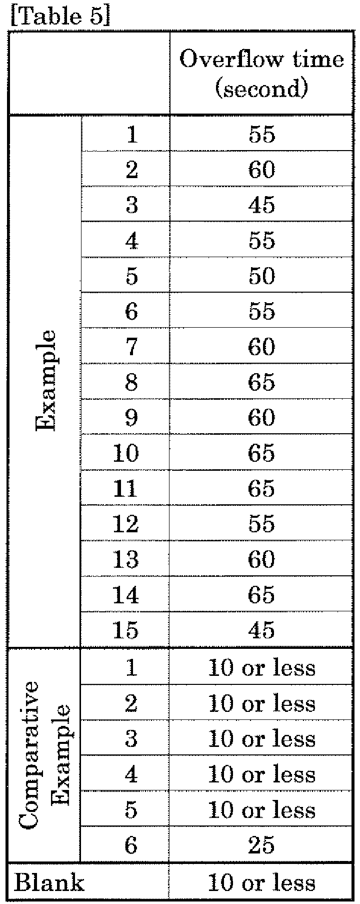

The defoaming agents of the present invention were very superior in defoamabilities in comparison to the comparative defoaming agents.

### INDUSTRIAL APPLICABILITY

While the defoaming agent of the present invention can be used for a wide variety of applications, it is effective for aqueous foamable liquids and can be applied to foams that generate during various steps of industries, such as the paper pulp manufacturing industry (pulp-making step, paper-making step, coating step, etc.), the construction industry (sheet making step), the dyestuff industry, the dyeing industry, the fermentation industry, the synthetic resin manufacturing industry, the synthetic rubber manufacturing industry, ink, the paint industry, and the fiber processing industry. Among these, it is suited as a defoaming agent for paint and a defoaming agent for waste water treatment, more suited as a defoaming agent for water-based paint, and it is best-suited as a defoaming agent for emulsion paint among water-based paints (paint for water-based building exterior decoration, paint for building interior decoration, water-based ink, paint of paper coating, and so on).

## Claims

1. A defoaming agent comprising a bisamide (A) in dispersion in a polyether compound (B), wherein
the content of the bisamide (A) is 0.01 to 10% by weight and the content of the polyether compound (B) is 90 to 99.99% by weight based on the weight of the bisamide (A) and the polyether compound (B), and
the mode in the particle diameter distribution on a volume basis of the bisamide (A) is 0.1 to 5 µm.

2. The defoaming agent according to claim 1, wherein the bisamide (A) is a bisamide represented by formula (1):
R¹-CONH(CH₂)ₜ-NHCOR¹ (1)
wherein R¹ is an alkyl group, an alkenyl group, a hydroxyalkyl group or a hydroxyalkenyl group having 10 to 22 carbon atoms, and t is an integer of 1 to 6.

3. The defoaming agent according to claim 1 or 2, wherein the polyether compound (B) is at least one member selected from the group consisting of a polyether compound (B1) represented by formula (2), a polyether compound (B2) represented by formula (3), a polyether compound (B3) represented by formula (4), a polyether compound (B4) represented by formula (5), and a polyether compound (B5) represented by formula (6): 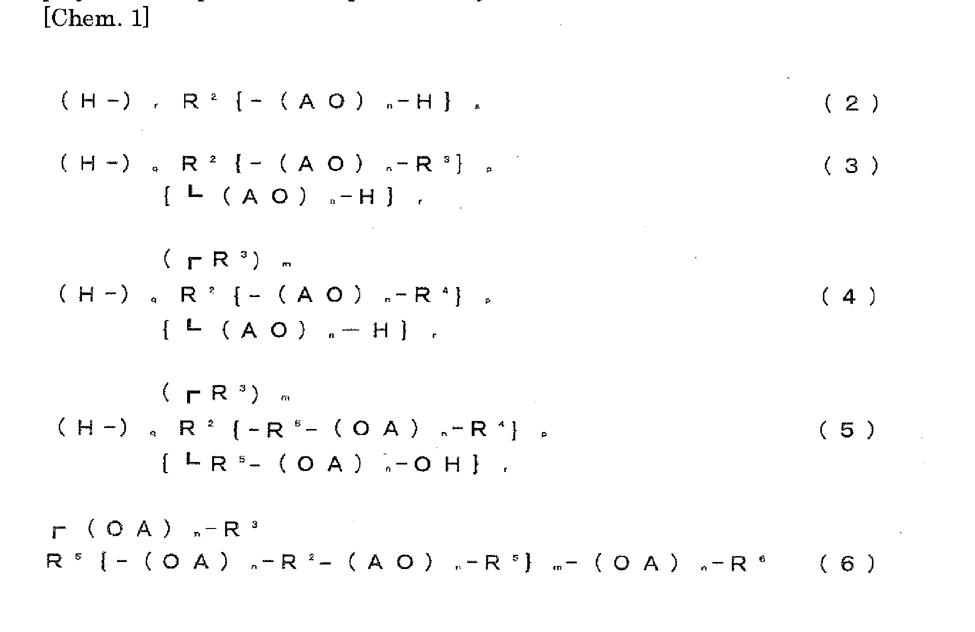 wherein R² represents a reaction residue of an active hydrogen compound having 1 to 25 carbon atoms, R³ and R⁴ each represent a monovalent organic group having 1 to 24 carbon atoms, R⁵ represents a divalent organic group having 1 to 24 carbon atoms, R⁶ represents a hydroxyl group or a monovalent organic group having 1 to 24 carbon atoms, and AO and OA each represent an oxyalkylene group having 2 to 18 carbon atoms, glycidol, a reaction residue of an alkyl glycidyl ether having 4 to 18 carbon atoms, or a reaction residue of an alkenyl glycidyl ether having 5 to 18 carbon atoms; the proportion accounted for by oxyethylene groups in (AO)n is 0 to 30% by weight; n is an integer of 1 to 100, wherein when there are two or more n in one molecule, they may be either identical or different; s is an integer of 1 to 10, p is an integer of 0 to 10, q is an integer of 0 to 9, r is an integer of 0 to 9, m is an integer of 0 to 9, p+r is an integer of 1 to 10, p+q+r is an integer of 3. to 10, and p+q+r+m is 2 to 10.

4. The defoaming agent according to any one of claims 1 to 3, wherein
the polyether compound (B) comprises a polyether compound (B1) and a polyether compound (B2), and
the content of the polyether compound (B1) is 10 to 90% by weight and the content of the polyether compound (B2) is 10 to 90% by weight based on the weight of the polyether compound (B).

5. The defoaming agent according to any one of claims 1 to 4, further comprising at least one dispersoid selected from the group consisting of a metallic soap (C), a synthetic resin (D), hydrophobic silica (E), and a wax (F), wherein
the content of the dispersoid is 0.005 to 10% by weight based on the weight of the bisamide (A) and the polyether compound (B), and
the mode in the particle diameter distribution on a volume basis of the dispersoid and the bisamide (A) is 0.1 to 10 µm.

6. The defoaming agent according to any one of claims 1 to 5, further comprising a crystal form controlling agent (G).

7. The defoaming agent according to claim 6, wherein the content of the crystal form controlling agent (G) is 0.01 to 10% by weight based on the weight of the bisamide (A) and the polyether compound (B).

8. A method for producing the defoaming agent according to any one of claims 1 to 7, wherein the method comprises:
step (1) of dissolving a bisamide (A) while heating and stirring the bisamide (A) and part of a polyether compound (B), thereby obtaining a solution,
step (2) of feeding the resulting solution into the remainder of the polyether compound (B) while cooling and stirring the remainder, thereby obtaining a fine dispersion of the bisamide (A), and
step (3) of subjecting the resulting fine dispersion to homogenization, thereby obtaining a defoaming agent.

9. A method for producing the defoaming agent according to any one of claims 1 to 7, wherein the method comprises:
step (4) of dissolving a bisamide (A) while heating and stirring the bisamide (A), part of a polyether compound (B), and a crystal form controlling agent (G), thereby obtaining a solution,
step (5) of feeding the resulting solution into the remainder of the polyether compound (B) while cooling and stirring the remainder, thereby obtaining a fine dispersion of the bisamide (A), and
step (6) of subjecting the resulting fine dispersion to homogenization, thereby obtaining a defoaming agent.

10. A method for producing the defoaming agent according to any one of claims 1 to 7, wherein the method comprises:
step (7) of dissolving a bisamide (A) while heating and stirring the bisamide (A), a polyether compound (B), and a crystal form controlling agent (G), thereby obtaining a solution,
step (8) of cooling and stirring the solution to make the bisamide (A) deposit, thereby obtaining a fine dispersion, and
step (9) of subjecting the resulting fine dispersion to homogenization, thereby obtaining a defoaming agent.

11. An emulsion paint comprising a resin emulsion, a pigment, an aqueous medium, and the defoaming agent according to any one of claims 1. to 7.

12. A waste water treatment method comprising a step of adding the defoaming agent according to any one of claims 1 to 7 to waste water to treat the waste water.
